# EUROPÄISCHE PATENTSCHRIFT

(11) **EP 1 222 102 B1**
(45) Veröffentlichungstag und Bekanntmachung des Hinweises auf die Patenterteilung: **23.04.2003**
(21) Anmeldenummer: 00983059.7
(22) Anmeldetag: 19.10.2000
(51) Int. Cl.: B62D 1/06

(54) **BAUTEIL MIT EINEM WÄRMESPEICHERMITTEL**
COMPONENT PART COMPRISING A HEAT ACCUMULATING MEDIUM
ELEMENT MUNI D'UN AGENT ACCUMULATEUR DE CHALEUR

(30) Priorität: 20.10.1999 DE 19951323
(43) Veröffentlichungstag der Anmeldung: 17.07.2002
(73) Patentinhaber: Takata-Petri AG, 63743 Aschaffenburg (DE)
(72) Erfinder: GERMUTH-LÖFFLER, Michael, 63741 Aschaffenburg (DE); BENDER, Jürgen, 60529 Frankfurt (DE); PAUL, Martin, 66629 Freisen (DE)
(74) Vertreter: Gross, Felix, Dr.
(86) Internationale Anmeldenummer: DE0003775
(87) Internationale Veröffentlichungsnummer: WO01028843

(56) Entgegenhaltungen:
- PATENT ABSTRACTS OF JAPAN vol. 1999, no. 14, 22. Dezember 1999 (1999-12-22) & JP 11 259157 A (NISSAN MOTOR CO LTD), 24. September 1999 (1999-09-24)

## Beschreibung

Die Erfindung betrifft ein Bauteil mit einem Wärmespeichermittel nach dem Oberbegriff der Ansprüche 1 und 3.

Bauteile, wie z.B. Lenkräder von Kraftfahrzeugen, werden im Sommer, insbesondere durch direkte Sonnenbestrahlung sehr heiß. Bei niedrigen Temperaturen im Winter kühlen Lenkräder nach Verlassen des Fahrzeuges rasch ab. Die Temperierung von Bauteiloberflächen ist daher eine Frage des Komforts. Aber auch die Sicherheit wird durch falsch temperierte Bauteile beeinträchtigt, denn ein zu heisses oder zu kaltes Lenkrad wird in der Regel nicht fest genug angefaßt, so daß eine Beeinträchtigung der Fahrsicherheit vorliegt.

Aus der DE 34 38 266 A1 ist eine Vorrichtung zum Heizen und Kühlen eines Lenkrades bekannt, in dessen Lenkradkranz thermoelektrische Wandler angeordnet sind, deren Wärmeerzeugungs- oder Wärmeabsorptionsabschnitte entsprechend der angelegten Stromrichtung Wärme erzeugen oder absorbieren. Im Inneren des Lenkrades ist ein hohles Kernteil angeordnet, in dessen Inneren sich ein wärmespeicherndes und / oder wärmeleitendes Fluid befindet. Durch die Verdampfung dieses Fluides wird die Wärmekapazität des Lenkrades erhöht und eine Aufheizung der Lenkradoberfläche wird vermieden. Dabei ist die Verwendung eines einzigen Ortes zur Aufnahme eines Wärmespeichermediums nachteilig, da der Wärmeübergang im Lenkrad verschlechtert wird.

Aus der JP 11259157 ist ein Bauteil nach dem Oberbegriff der Ansprüche 1 und 3, insbesondere ein Handgriff bekannt, der mehrere Behältnisse aus Kunstharz aufweist, die mit einem regenerierbaren Mittel gefüllt sind. Das regenerierbare Mittel soll eine übermässige Erwärmung des Handgriffs verhindern.

Der vorliegenden Erfindung liegt die Aufgabe zugrunde, eine Bauteils, insbesondere ein Lenkrades, zu schaffen, bei dem die Temperierung verbessert wird.

Diese Aufgabe wird erfindungsgemäß durch ein Bauteil mit den Merkmalen der Ansprüche 1 und 3 gelöst.

Durch mindestens zwei im Bauteil räumlich getrennt angeordnete Bereiche für das Wärmespeichermittel kann dies räumlich gezielter im Bauteil eingesetzt werden, als wenn das Wärmespeichermittel nur an einer Stelle im Bauteil konzentriert wäre. Dadurch wird der Wärmeübergang, und damit die Temperierung des Lenkrades, verbessert. Insbesondere sorgt die räumliche Trennung der Bereiche dafür, daß verglichen mit einem einzigen Bereich jeweils kleinere Bereiche des Wärmespeichermittels gekühlt oder aufgewärmt werden müssen. Mehrere Bereich weisen eine größere Oberfläche als ein einziger Bereich auf, was zur Verbesserung des Wärmeübergangs beiträgt. Auch können durch geeignete Anordnung der räumlich getrennten Bereiche im Bauteil Massenkräfte besser verteilt werden.

In einer vorteilhaften Ausgestaltung der Erfindung besteht das Bauteil mindestens teilweise aus einem porösem Material, insbesondere Kunststoff. Die Poren weisen als Wärmespeichermittel ein Phasenübergangsmittel auf, das innerhalb der Betriebstemperaturen des Bauteils den Aggregatzustand wechseln kann. Beim Wechsel des Aggregatzustandes (auch Phasenwechsel genannt) wird Energie benötigt oder abgegeben, so daß die energiereichere Phase als Wärmespeicher dienen kann. Entsprechend kann die energieärmere Phase als Wärmesenke dienen. So wird z.B. Verdampfungwärme benötigt, um einen Stoff vom flüssigen in den gasförmigen Aggregatzustand zu bringen. Das Gas kann damit als Wärmespeicher dienen, dessen Energie bei einer Kondensation als Kondensationswärme wieder abgegeben wird. Analoges gilt für einen Flüssig-Fest-Phasenübergang bei dem Schmelzwärme aufgewandt, bzw. Erstarrungswärme frei wird und für Sublimationsvorgänge bei einem Fest-Gasförmig-Phasenübergang.

In einer besonders vorteilhaften Ausgestaltung der Erfindung werden Freon oder Wasser als Phasenübergangsmittel verwendet. Diese Stoffe sind als Wärmespeichermittel besonders gut geeignet.

In einer weiteren vorteilhaften Ausgestaltung besteht das Bauteil mindestens teilweise aus einem porösem Material, insbesondere Kunststoff, dessen Poren als Wärmespeichermittel ein Wärmespeichermedium aufweisen. Das Wärmespeichermedium behält bei üblichen den Betriebstemperaturen des Bauteils seinen Aggregatzustand bei. In diesem Fall findet die Wärmespeicherung über die Wärmekapazität des Wärmespeichermittels statt.

In vorteilhafter Weise weist dabei das Wärmespeichermedium Wasser mit Frostschutzmittel, Metallstücke, Metallpulver, Glykol, Gel und / oder Öl als Wärmespeichermedium auf. Diese Stoffe sind aufgrund ihrer Wärmekapazität besonders als Wärmespeichermedium geeignet.

Mit Vorteil ist das Wärmespeichermittel in Teilbereichen, insbesondere Griffzonen des Bauteils angeordnet. Damit kann eine dem Benutzer angepaßte Anordnung gewählt werden, so daß ein besonderer Bedienungskomforts erzielt wird.

Die Erfindung wird nachfolgend unter Bezugnahme auf die Figuren der Zeichnungen an mehreren Ausführungsbeispielen näher erläutert. Es zeigen:
- Fig. 1: eine Vorderansicht eines Lenkrades;
- Fig. 1a: eine Seitenansicht des Lenkrades;
- Fig. 2: eine Schnittansicht entlang A-A in Fig. 1;
- Fig. 3: eine Schnittansicht entlang A-A in Fig. 1 in einer anderen Ausführungsform des Lenkrades;
- Fig. 4: eine Schnittansicht entlang A-A in Fig. 1 des Lenkrades mit einem Wärmespeichermittel in einer äußeren Schicht der Ummantelung;
- Fig. 5: eine Schnittansicht entlang A-A in Fig. 1 des Lenkrades mit einem Wärmespeichermittel in der gesamten Ummantelung des Lenkrades;
- Fig. 6: eine Schnittansicht entlang A-A in Fig. 1 des Lenkrades mit einem Wärmespeichermittel in einem Teilbereich der Lenkradummantelung;
- Fig. 7: eine schematische Ansicht des Lenkrades mit Teilbereichen mit erhöhter Wärmespeichermittel-Konzentration;
- Fig. 8: eine graphische Darstellung der Lenkradtemperatur in Abhängigkeit aufgenommener Wärmeenergie; mit und ohne Phasenübergangsmaterial.

Die vorliegende Erfindung wird in den folgenden Figuren anhand eines Lenkrades beschrieben. Grundsätzlich ist es aber auch möglich, andere Bauteile, wie z.B. Steuerknüppel, Schalthebel, Schaltknaufe, Griffe, Kurbeln, Handbremsgriffe, Gurtschlösser, Sitzflächen, Sitzlehnen, Kopfstützen, Gangschaltungsknüppel oder Schalter erfindungsgemäß zu temperieren. Unter Temperieren wird das Abkühlen oder Aufheizen auf eine vorgebbare Temperatur verstanden. Ziel ist in jedem Fall die Vermeidung von für einen Benutzer zu heißen oder zu kalten Bauteilen.

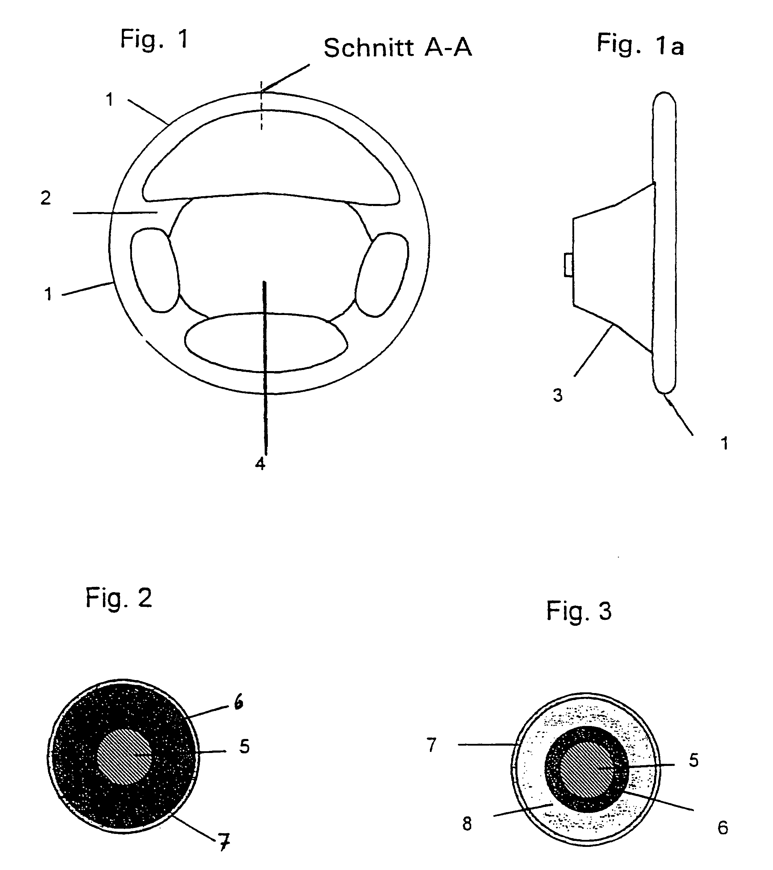

In Fig. 1 und 1a ist ein Lenkrad mit den typischen Bereichen Lenkradkranz 1, Lenkradspeichen 2, Lenkradkörper 3 und Airbageinheit 4 dargestellt. Ein solches Lenkrad findet z.B. in Kraftfahrzeugen aller Art Verwendung.

In Fig. 2 ist der typische Innenaufbau eines Lenkrades dargestellt. Die Schnittebene A-A ist in Fig. 1 dargestellt. Das Lenkrad selbst wird im Kern aus einem Skelett 5 gebildet. Dieses ist von einer Ummantelung 6 und einem Überzug 7 (z.B. aus Leder) umgeben. Andere Lenkräder weisen einen Innenaufbau wie in Fig. 3 dargestellt auf, bei dem das Skelett 5 von einer harten Ummantelung 6 (z.B. aus Hartschaum) und einer weichen Ummantelung 8 (z.B. Weichschaum) umgeben ist.

Das Skelett 5 besteht bei den Gegenständen in Fig. 2 und 3 aus Vollmaterial. Alternativ kann das Skelett 5 auch aus einer Stahlrohrkonstruktion mit Hohlprofil oder aus einer Aluminium- bzw. Magnesiumgußkonstruktion gebildet sein. Auch können alternative Ausführungsformen eine nicht-runde Lenkradform aufweisen.

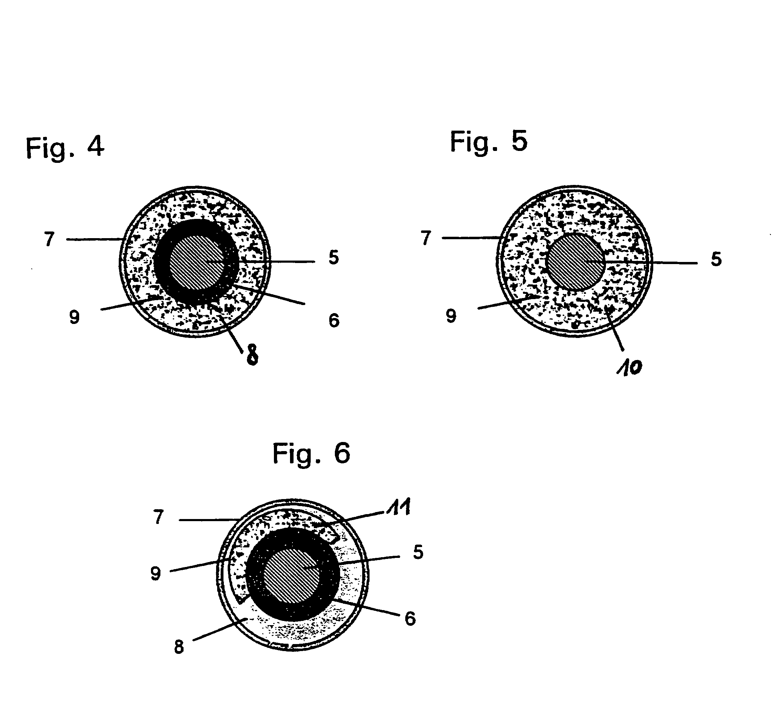

In Fig. 4 ist ein Querschnitt durch ein Lenkrad nach Fig. 3 dargestellt. Die in Fig. 4 dargestellte Ausführungsform weist in der weichen Ummantelung 8 Poren als Mittel zur Speicherung eines Phasenübergangsmittel als Wärmespeichermittel 9 auf. Die Poren sind über die weiche Ummantelung 8 räumlich verteilt; die bilden die räumlich getrennten Bereiche. Auch wenn hier eine sehr große Anzahl von Poren verwendet wird, so ist es in alternativen Ausführungsformen auch möglich, nur zwei räumlich getrennte Bereiche mit einem Wärmespeichermittel 9 im Bauteil anzuordnen, um lokal die Wärmeübertragung zu verbessern.

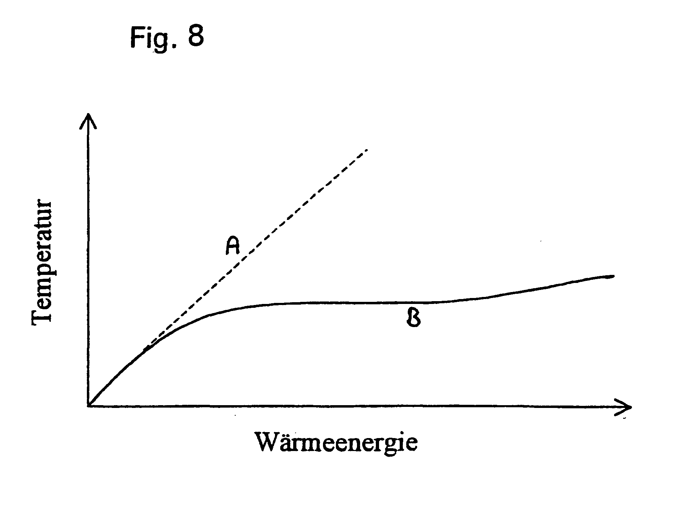

Räumlich getrennt im Sinne der Erfindung bedeutet, daß das Wärmespeichermittel nicht in einem einzigen, in sich geschlossenen Bereich (z.B. ein Hohlrohr) im Bauteil angeordnet ist, sondern sich in einzelnen Bereichen (z.B Poren) über das Bauteil verteilt. Diese Bereiche mit dem Wärmespeichermittel müssen aber nicht über das ganze Bauteil gleich verteilt sein. Wie z.B. in Fig. 8 dargestellt, kann das Wärmespeichermittel auch gezielt in einigen Teilbereichen (z.B. Griffzonen) des Lenkrades angeordnet sein. Auch hier liegen räumlich getrennte Bereiche des Wärmespeichermittels vor.

Als Phasenübergangsmittel dient hier Freon, das unter Wärmeeinwirkung (z.B. Sonneneinstrahlung auf das Lenkrad) verdampft. Alternativ können auch Wasser bei niedrigem Druck oder eine Metallegierung verwendet werden. Bei diesen Stoffen ist bei den üblichen Betriebstemperaturen des Bauteils (z.B. -40°C bis 100°C) ein Wechsel des Aggregatzustandes möglich. Die dazu notwendige Phasenänderungsenergie (z.B. Schmelzenergie, Verdampfungsenergie) dient der Wärmespeicherung im Bauteil.

Im vorliegenden Beispiel wird durch die aufzubringende Verdampfungswärme verhindert, daß sich die Lenkradoberfläche zu stark aufheizt. Da der Wärmeübertragungskoeffizient zwischen der Wandung der Pore und dem gasförmigen Phasenübergangsmittel sehr viel schlechter ist als zwischen der Wandung der Pore und einem flüssigem Phasenübergangsmittel, erfolgt keine so starke Aufheizung der Lenkradoberfläche.

In einer weiteren Ausführungsform, die in Fig. 5 dargestellt ist, ist die gesamte Ummantelung 10 des Lenkrades mit Poren als Mittel zur Speicherung des flüssigen Phasenübergangsmittels versehen. Die Funktion ist analog zu der in Fig. 4 dargestellten Ausführungsform.

In der in Fig. 6 dargestellten Ausführungsform weist das Lenkrad einen Teilbereich 11 auf, in dem Poren als Mittel zur Aufnahme eine Phasenübergangsmittels angeordnet sind. Außerhalb des Teilbereiches 11 sind keine Poren angeordnet. So kann z.B. der obere Bereich eines Lenkrades, der der Sonneneinstrahlung besonders intensiv ausgesetzt ist, an diesen Stellen besonders gegen eine Überhitzung geschützt werden.

In einer alternativen Ausführungsform ist die Dichte der Poren im Teilbereich 11 erhöht gegenüber der Porendichte in den übrigen Bereichen der weichen Ummantelung 8.

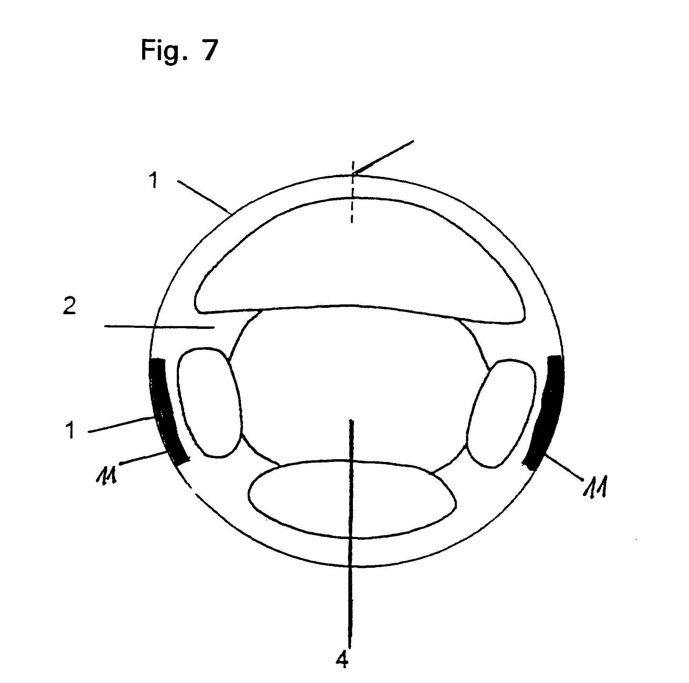

In Fig. 6 ist der Teilbereich 11 über einen Winkelbereich im Querschnitt des Lenkradkranzes 1 angeordnet. In einer weiteren Ausgestaltungsform sind Teilbereiche 11 an typischen Griffzonen des Lenkradkranzes 1 angeordnet, wie es in Fig. 7 dargestellt ist. Durch die Anordnung der Teilbereiche 11 in den Griffzonen des Lenkrades wird der Bedienungskomfort erhöht.

In Fig. 8 ist schematisch dargestellt, wie sich die Temperatur an der Lenkradoberfläche in Abhängigkeit von aufgenommener Wärmeenergie verhält. Kurve A stellt dabei den Temperaturverlauf dar, der entsteht, wenn kein Wärmespeichermittel verwendet wird; die Lenkradoberfläche heizt sich immer mehr auf.

Kurve B hingegen zeigt einen wesentlich schwächeren Anstieg der Temperatur, da hier das im Lenkrad angeordnete Wärmespeichermittel Wärme aufnimmt, und somit verhindert, daß sich die Lenkradoberfläche zu stark aufheizt.

Die gleichen Zusammenhänge gelten analog für das Abkühlen, das aufgrund der im Wärmespeichermittel gespeicherten Wärme langsamer vor sich geht.

Die Erfindung beschränkt sich in ihrer Ausführung nicht auf die vorstehend angegebenen bevorzugten Ausführungsbeispiele. Vielmehr ist eine Anzahl von Varianten denkbar, die von dem erfindungsgemäßen Bauteil auch bei grundsätzlich anders gearteten Ausführungen Gebrauch machen.

## Patentansprüche

1. Bauteil, insbesondere ein Lenkrad für ein Kraftfahrzeug, mit einem in mindestens zwei räumlich getrennten Bereichen des Bauteils angeordneten Wärmespeichermittel,
**dadurch gekennzeichnet, daß**
das Bauteil mindestens teilweise aus einem porösem Material, insbesondere Kunststoff, besteht, dessen Poren als Wärmespeichermittel (9) ein Phasenübergangsmittel aufweisen, das innerhalb der üblichen Betriebstemperaturen des Bauteils den Aggregatzustand wechseln kann.

2. Bauteil nach Anspruch 1, **dadurch gekennzeichnet, daß** als Phasenübergangsmittel Freon oder Wasser verwendet wird.

3. Bauteil, insbesondere ein Lenkrad für ein Kraftfahrzeug, mit einem in mindestens zwei räumlich getrennten Bereichen des Bauteils angeordneten Wärmespeichermittel,
**dadurch gekennzeichnet,**
**daß** das Bauteil mindestens teilweise aus einem porösem Material, insbesondere Kunststoff besteht, dessen Poren als Wärmespeichermittel (9) ein Wärmespeichermedium aufweisen, wobei das Wärmespeichermittel bei den üblichen Betriebstemperaturen des Bauteils seinen Aggregatzustand behält.

4. Bauteil nach Anspruch 3, **dadurch gekennzeichnet, daß** das Wärmespeichermittel (9) Wasser mit einem Frostschutzmittel, Metallstücke, Metallpulver, Glykol, Gel und/oder Öl als Wärmespeichermedium aufweist.

5. Bauteil nach mindestens einem der vorhergehenden Ansprüche, **dadurch gekennzeichnet, daß** das Wärmespeichermittel (9) in Teilbereichen (11), insbesondere Griffzonen des Bauteils angeordnet ist.

## Claims

1. Component part, in particular a steering wheel for a motor vehicle, comprising a heat accumulating means which is arranged in at least two spatially separate regions of the component part, **characterized in that** the component at least partially comprises a porous material, in particular plastic, the pores of which, as heat accumulating means (9), have a phase change material which can change its state of aggregation within the standard operating temperatures of the component part.

2. Component part according to Claim 1, **characterized in that** the phase change material used is Freon or water.

3. Component part, in particular a steering wheel for a motor vehicle, comprising a heat accumulating means which is arranged in at least two spatially separate regions of the component part, **characterized in that** the component part at least partially comprises a porous material, in particular plastic, the pores of which have, as heat accumulating means (9), a heat accumulating medium, the heat accumulating means retaining its state of aggregation at the standard operating temperatures of the component part.

4. Component part according to Claim 3, **characterized in that** the heat accumulating means (9) has water with an antifreeze, pieces of metal, metal powder, glycol, gel and/or oil as heat accumulating medium.

5. Component part according to at least one of the preceding claims, **characterized in that** the heat accumulating means (9) is arranged in partial regions (11), in particular grip zones of the component part.

## Revendications

1. Composant, en particulier un volant pour un véhicule à moteur, avec un milieu accumulateur de chaleur placé dans au moins deux zones spatialement séparées du composant,
**caractérisé en ce que** le composant est constitué au moins en partie d'un matériau poreux, en particulier d'un matériau synthétique, dont les pores en tant que milieu accumulateur de chaleur (9) présentent un milieu à transition de phase qui peut modifier l'état de matière dans la plage des températures de fonctionnement ordinaires du composant.

2. Composant selon la revendication 1 **caractérisé en ce que** l'on utilise un fréon ou de l'eau en tant que milieu à transition de phase.

3. Composant, en particulier un volant pour un véhicule à moteur, avec un milieu accumulateur de chaleur placé dans au moins deux zones spatialement séparées du composant,
**caractérisé en ce que** le composant est constitué au moins en partie d'un matériau poreux, en particulier d'un matériau synthétique, dont les pores en tant que milieu accumulateur de chaleur (9) présentent un agent accumulateur de chaleur (9), le milieu accumulateur de chaleur conservant son état de matière dans la plage des températures de fonctionnement ordinaires du composant.

4. Composant selon la revendication 3 **caractérisé en ce que** le milieu accumulateur de chaleur (9) présente de l'eau avec un antigel, des parties métalliques, de la poudre de métal, du glycol, un gel et/ou de l'huile en tant qu'agent accumulateur de chaleur.

5. Composant selon au moins l'une des revendications précédentes **caractérisé en ce que** le milieu accumulateur de chaleur (9) est placé dans des zones partielles (11), en particulier des zones de saisie du composant.
